# EUROPÄISCHE PATENTSCHRIFT

(11) **EP 3 616 510 B1**
(45) Veröffentlichungstag und Bekanntmachung des Hinweises auf die Patenterteilung: **23.10.2024**
(21) Anmeldenummer: 19401028.6
(22) Anmeldetag: 14.08.2019
(51) Int. Cl.: A01M 7/00

(54) **VERFAHREN ZUM BESTIMMEN EINER NOTWENDIGEN MENGE AN AUSBRINGMATERIAL**
METHOD FOR DETERMINING A REQUIRED AMOUNT OF APPLIED MATERIAL
PROCÉDÉ DE DÉTERMINATION D'UNE QUANTITÉ NÉCESSAIRE DU MATÉRIAU D'ÉPANDAGE

(30) Priorität: 28.08.2018 DE 102018120946
(43) Veröffentlichungstag der Anmeldung: 04.03.2020
(73) Patentinhaber: Amazonen-Werke H. Dreyer SE & Co. KG, 49205 Hasbergen (DE)
(72) Erfinder: Kühn, Christoph, 49186 Bad Iburg (DE); Große Brinkhaus, Andre, 48149 Münster (DE)

(56) Entgegenhaltungen:
- EP-A1- 3 014 969
- EP-A1- 3 180 970
- WO-A1-2011/092545
- DE-A1- 19 835 487
- US-A- 5 768 128

## Beschreibung

Die Erfindung betrifft ein Verfahren zur Vorbereitung eines Ausbringungsvorgangs auf einer landwirtschaftliche Nutzfläche nach Patentanspruch 1 sowie eine Vorrichtung zum Bestimmen der notwendigen Menge an Ausbringmaterial für einen Ausbringvorgang auf einer landwirtschaftlichen Nutzfläche nach Anspruch 9.

Vor dem Ausbringen von Material auf einer landwirtschaftlichen Nutzfläche wird stets versucht, die landwirtschaftliche Ausbringmaschine mit einer geeigneten Menge von Ausbringmaterial zu befüllen. Die Befüllung der landwirtschaftlichen Ausbringmaschine soll dabei derart erfolgen, dass ein nachträgliches Auffüllen der landwirtschaftlichen Ausbringmaschine während des Ausbringvorgangs vermieden wird oder passgenau erfolgen kann.

Darüber hinaus soll die Befüllung außerdem derart umgesetzt werden, dass nach Beendigung des Ausbringvorgangs kein Ausbringmaterial in der landwirtschaftlichen Ausbringmaschine verbleibt. Hierdurch wird ein zeit- und somit kostenaufwendiges Entleeren der landwirtschaftlichen Ausbringmaschine nach Beendigung des Ausbringvorgangs vermieden. Die präzise Befüllung der landwirtschaftlichen Ausbringmaschine mit einer geeigneten Menge an Ausbringmaterial und der nachfolgende Ausbringvorgang, bei dessen Beendigung kein Ausbringmaterial in der landwirtschaftlichen Ausbringmaschine verbleibt, wird auch als work-to-zero bezeichnet.

Eine entsprechende vollständige Entleerung ist dabei bei unterschiedlichen landwirtschaftlichen Ausbringmaschinen wünschenswert, beispielsweise bei Streugeräten, wie etwa Düngerstreuern, und Spritzgeräten, wie etwa Pflanzenschutzspritzen.

Aus der Druckschrift EP 3 014 969 A1 ist bekannt, dass neben der Feldgrenze weitere Positionsdaten innerhalb der Feldgrenze in einem Speicher einer Datenverarbeitungseinrichtung hinterlegt sein können. Ferner wird in der DE 198 35 487 A1 offenbart, dass Karten und Daten über die Kontur eines Feldes von Datenverarbeitungseinrichtungen verarbeitet werden können.

In der Praxis ist jedoch bisher keine präzise Bestimmung der für einen Ausbringvorgang auf einer landwirtschaftlichen Nutzfläche notwendige Menge an Ausbringmaterial durchführbar. Die bekannten Verfahren zum Bestimmten der notwendigen Menge an Ausbringmaterial sind folglich noch zu unpräzise.

Die der Erfindung zugrundeliegende Aufgabe besteht somit darin, die Präzision beim Bestimmen der für einen Ausbringvorgang auf einer landwirtschaftlichen Nutzfläche notwendige Menge an Ausbringmaterial zu erhöhen.

Die Aufgabe wird gelöst durch ein Verfahren zum Bestimmen der für einen Ausbringvorgang notwendigen Menge an Ausbringmaterial der eingangs genannten Art, wobei in dem erfindungsgemäßen Verfahren beim Berechnen der notwendigen Menge an Ausbringmaterial für den Ausbringvorgang auf der landwirtschaftlichen Nutzfläche durch die Datenverarbeitungseinrichtung die von der im wesentlichen gleichmäßigen Materialausbringung innerhalb von grenzfernen Innenbereichen der landwirtschaftlichen Nutzfläche abweichende Grenzausbringung innerhalb von grenznahen Bereichen der landwirtschaftlichen Nutzfläche berücksichtigt wird.

Die Erfindung macht sich die Erkenntnis zunutze, dass in grenznahen Bereichen üblicherweise eine verringerte Menge an Ausbringmaterial ausgebracht wird, sodass die mittlere Ausbringrate in grenznahen Bereichen niedriger ist als in grenzfernen Innenbereichen der landwirtschaftlichen Nutzfläche. Dies kann beispielsweise damit zusammenhängen, dass beim Grenz- und/oder Randstreuen aufgrund der Ausbringeigenschaften der verwendeten landwirtschaftlichen Ausbringmaschine keine gleichmäßige Materialausbringung realisierbar ist. Insbesondere in Bereichen, in welchen Gewässer, benachbarte Flächen oder Straßen eine Grenze der landwirtschaftlichen Nutzfläche darstellen, kommt es darüber hinaus teilweise zur Einhaltung eines gewissen Grenzabstandes und/oder zum Betrieb der Ausbringmaschine in einem Grenzmodus, sodass das Risiko einer Materialausbringung über die Grenzen der landwirtschaftlichen Nutzfläche hinaus verringert wird. Außerdem sind Ausbringstrategien bekannt, bei welchen eine Materialausbringung über die Grenzen der landwirtschaftlichen Nutzfläche hinaus absichtlich umgesetzt wird.

Die Berücksichtigung dieser Ausbringmethoden innerhalb von grenznahen Bereichen von landwirtschaftlichen Nutzflächen ist notwendig, damit eine präzise Ermittlung der notwendigen Menge an Ausbringmaterial für den Ausbringvorgang erfolgen kann. Auf Grundlage der Bestimmung der für den Ausbringvorgang notwendigen Menge an Ausbringmaterial kann anschließend eine präzise Befüllung der landwirtschaftlichen Ausbringmaschine erfolgen, sodass nach Beendigung des Ausbringvorgangs kein Ausbringmaterial in der landwirtschaftlichen Ausbringmaschine verbleibt.

Das Verfahren kann von einer Datenverarbeitungseinrichtung durchgeführt werden. Die Datenverarbeitungseinrichtung kann Bestandteil einer landwirtschaftlichen Ausbringmaschine oder eines maschinenexternen Computersystems sein. Der Ausbringvorgang kann beispielsweise ein Streuvorgang sein, welcher mit einem landwirtschaftlichen Streugerät auszuführen ist, wobei das Ausbringmaterial in diesem Fall Streugut, beispielsweise Dünger, ist. Der Ausbringvorgang kann beispielsweise ein Spritzvorgang sein, welcher mit einem landwirtschaftlichen Spritzgerät auszuführen ist, wobei das Ausbringmaterial in diesem Fall Spritzflüssigkeit, beispielsweise Pflanzenschutzmittel, ist. Der Ausbringvorgang kann beispielsweise ein Sävorgang sein, welcher mit einem landwirtschaftlichen Sägerät auszuführen ist, wobei das Ausbringmaterial in diesem Fall Saatgut und/oder Dünger ist.

In einer bevorzugten Ausführungsform des erfindungsgemäßen Verfahrens werden grenzferne Innenbereiche der landwirtschaftlichen Nutzfläche erfasst und/oder die für die grenzfernen Innenbereiche der landwirtschaftlichen Nutzfläche notwendige Menge an Ausbringmaterial für den Ausbringvorgang ermittelt. Die Ermittlung der für die grenzfernen Innenbereiche der landwirtschaftlichen Nutzfläche notwendigen Menge an Ausbringmaterial für den Ausbringvorgang erfolgt vorzugsweise separat zu der Ermittlung der für die grenznahen Bereiche der landwirtschaftlichen Nutzfläche notwendigen Menge an Ausbringmaterial für den Ausbringvorgang. Moderne landwirtschaftliche Ausbringmaschinen erlauben eine vergleichsweise gleichmäßige Materialausbringung in den grenzfernen Innenbereichen einer landwirtschaftlichen Nutzfläche, sodass die für die grenzfernen Innenbereiche notwendige Menge an Ausbringmaterial vergleichsweise präzise bestimmbar ist.

In einer weiteren Ausführungsform des erfindungsgemäßen Verfahrens umfasst das Ermitteln der für die grenzfernen Innenbereiche der landwirtschaftlichen Nutzfläche notwendigen Menge an Ausbringmaterial für den Ausbringvorgang das Ermitteln einer beabsichtigten Ausbringrate für die grenzfernen Innenbereiche der landwirtschaftlichen Nutzfläche und/oder das Ermitteln der Flächengröße der grenzfernen Innenbereiche der landwirtschaftlichen Nutzfläche. Die Ausbringrate ist dabei vorzugsweise eine Angabe, welche ein Gewicht oder ein Volumen mit einer Fläche ins Verhältnis setzt. Die Ausbringrate kann beispielsweise die Einheit Kilogramm pro Hektar oder die Einheit Liter pro Hektar aufweisen. Durch eine Multiplikation der beabsichtigten Ausbringrate für die grenzfernen Innenbereiche der landwirtschaftlichen Nutzfläche und der Flächengröße der grenzfernen Innenbereiche der landwirtschaftlichen Nutzfläche kann die notwendige Menge an Ausbringmaterial für die grenzfernen Innenbereiche der landwirtschaftlichen Nutzfläche bestimmt werden.

In einer Weiterbildung des erfindungsgemäßen Verfahrens werden grenznahe Bereiche der landwirtschaftlichen Nutzfläche erfasst und/oder die für die grenznahen Bereiche der landwirtschaftlichen Nutzfläche notwendige Menge an Ausbringmaterial für den Ausbringvorgang ermittelt. Vorzugsweise erfolgt die Ermittlung der für die grenznahen Bereiche der landwirtschaftlichen Nutzfläche notwendigen Menge an Ausbringmaterial separat zu der Ermittlung der für die grenzfernen Innenbereiche landwirtschaftlichen Nutzfläche notwendigen Menge an Ausbringmaterial für den Ausbringvorgang.

Außerdem ist ein erfindungsgemäßes Verfahren vorteilhaft, bei welchem das Ermitteln der für die grenznahen Bereiche der landwirtschaftlichen Nutzfläche notwendigen Menge an Ausbringmaterial für den Ausbringvorgang das Erm itteln der mittleren Ausbringrate für die grenznahen Bereiche der landwirtschaftlichen Nutzfläche und/oder das Ermitteln der Flächengröße der grenznahen Bereiche der landwirtschaftlichen Nutzfläche umfasst. Aufgrund von Ausbringbeschränkungen und/oder beschränkter Anpassungsmöglichkeiten der verwendeten landwirtschaftlichen Ausbringmaschine weicht die mittlere Ausbringrate für die grenznahen Bereiche der landwirtschaftlichen Nutzfläche regelmäßig von der mittleren Ausbringrate für die grenzfernen Innenberei che der landwirtschaftlichen Nutzfläche ab. Durch eine Multiplikation der mittleren Ausbringrate für die grenznahen Bereiche der landwirtschaftlichen Nutzfläche und der Flächengröße der grenznahen Bereiche der landwirtschaftlichen Nutzfläche kann die notwendige Menge an Ausbringmaterial für die grenznahen Bereiche der landwirtschaftlichen Nutzfläche bestimmt werden. Die grenznahe Flächengröße kann unter anderem durch eine definierte Arbeitsbreite an der Grenze errechnet werden.

In einer anderen Ausführungsform des erfindungsgemäßen Verfahrens umfasst das Ermitteln der für die grenznahen Bereiche der landwirtschaftlichen Nutzfläche notwendigen Menge an Ausbringmaterial das Rastern der grenznahen Bereiche der landwirtschaftlichen Nutzfläche in mehrere Rasterflächen und/oder das Ermitteln eines Mengenkorrekturfaktors für die jeweiligen Rasterflächen der grenznahen Bereiche der landwirtschaftlichen Nutzfläche. Durch eine Multiplikation der beabsichtigten Ausbringrate im Bereich einer Rasterfläche, der Flächengröße einer Rasterfläche und dem der Rasterfläche zugeordnetem Mengenkorrekturfaktor kann die notwendige Menge an Ausbringmaterial für die einzelnen Rasterflächen bestimmt werden. Diese können zum Bestimmten der notwendigen Menge an Ausbringmaterial für die grenznahen Bereiche der landwirtschaftlichen Nutzfläche summiert werden.

Außerdem ist ein erfindungsgemäßes Verfahren vorteilhaft, bei welchem die Grenze der landwirtschaftlichen Nutzfläche in mehrere Grenzsegmente gegliedert wird und/oder jedem der Grenzsegmente ein Grenztyp zugeordnet wird. Beim Ermitteln der für die grenznahen Bereiche der landwirtschaftlichen Nutzfläche notwendigen Menge an Ausbringmaterial für den Ausbringvorgang werden vorzugsweise die Grenztypen der Grenzsegmente berücksichtigt. Unterschiedlichen Grenztypen können sich ergeben durch das Angrenzen der landwirtschaftlichen Nutzfläche an ein Gewässer oder einen Graben, einen Weg, eine Straße, eine andere landwirtschaftliche Nutzfläche oder an ein Wohngrundstück. Die unterschiedlichen Grenztypen bedürfen teilweise voneinander abweichende Anpassungen der Materialausbringung. Dies führt zu unterschiedlichen Ausbringraten und/oder Mengen im Bereich von Grenzsegmenten, deren Grenztypen sich voneinander unterscheiden. Beispielsweise kann das Tröpfchenspektrum bei einigen Grenztypen zur Verringerung des Abdrifts angepasst werden, wenn der Ausbringvorgang ein Spritzvorgang ist. Beispielsweise kann der Streugutabwurf bei einigen Grenztypen zur Einstellung einer geeigneten Querverteilung angepasst werden, wenn der Ausbringvorgang ein Streuvorgang ist.

In einer bevorzugten Ausführungsform des erfindungsgemäßen Verfahrens wird die einzusetzende Ausbringmaschine erfasst. Alternativ oder zusätzlich werden die Anpassungsbeschränkungen der Materialausbringung der einzusetzenden Ausbringmaschine, insbesondere hinsichtlich der Querverteilung des Ausbringmaterials, erfasst. Beim Ermitteln der für die grenznahen Bereiche der landwirtschaftlichen Nutzfläche notwendigen Menge an Ausbringmaterial für den Ausbringvorgang werden vorzugsweise die Anpassungsbeschränkungen der Materialausbringung der einzusetzenden Ausbringmaschine berücksichtigt. Die Ausbringmaschine kann ein landwirtschaftliches Streugerät sein. An landwirtschaftlichen Streugeräten können aufgrund der Abwurfausbringung keine beliebigen Querverteilungen eingestellt werden. Diese Einschränkung ist beim Erfassen der notwendigen Menge an Ausbringmaterial an den grenznahen Bereichen einer landwirtschaftlichen Nutzfläche zu berücksichtigen. Die Ausbringmaschine kann alternativ ein landwirtschaftliches Spritzgerät sein. Insbesondere bei Umgebungsbedingungen, bei denen ein gesteigerter Abdrift der auszubringenden Flüssigkeit zu erwarten ist, wird in grenznahen Bereichen einer landwirtschaftlichen Nutzfläche oftmals eine verringerte Menge an Ausbringmaterial ausgebracht. Außerdem kann es selbst bei einer Einzeldüsensteuerung bei landwirtschaftlichen Spritzgeräten vorkommen, dass die Ausbringung bis an die Grenze der landwirtschaftlichen Nutzfläche nicht möglich ist. In diesem Fall kann beispielsweise ein schmaler Streifen von der Materialausbringung ausgenommen oder das Material über die Grenzen der landwirtschaftlichen Nutzfläche hinweg ausgebracht werden. Auch dies ist bei der Bestimmung der notwendigen Gesamtmenge an Ausbringmaterial zu berücksichtigen.

Zur Ermittlung der notwendigen Menge können auch sonstige zu erwartende Ausbringüberlappungen und/oder Ausbringlücken auf der landwirtschaftlichen Nutzfläche, das heißt sowohl in den grenzfernen Innenbereichen als auch in den grenznahen Bereichen der landwirtschaftlichen Nutzfläche, berücksichtigt werden.

Die der Erfindung zugrundeliegende Aufgabe wird ferner durch ein Verfahren zur Vorbereitung eines Ausbringvorgangs auf einer landwirtschaftlichen Nutzfläche der eingangs genannten Art gelöst, wobei im Rahmen des erfindungsgemäßen Verfahrens das Bestimmten der notwendigen Menge an Ausbringmaterial für den Ausbringvorgang mit einem Verfahren nach einer der vorstehend beschriebenen Ausführungsformen erfolgt. Die Befüllung der landwirtschaftlichen Ausbringmaschine erfolgt also derart, dass nach Beendigung des Ausbringvorgangs kein Ausbringmaterial in der landwirtschaftlichen Ausbringmaschine verbleibt. Es kommt also zum Umsetzen des work-to-zero-Gedankens.

Die der Erfindung zugrundeliegende Aufgabe wird ferner durch eine Vorrichtung der eingangs genannten Art gelöst, wobei die erfindungsgemäße Vorrichtung dazu eingerichtet ist, das Verfahren zum Bestimmen der für einen Ausbringvorgang auf einer landwirtschaftlichen Nutzfläche notwendigen Menge an Ausbringmaterial nach einer der vorstehend beschriebenen Ausführungsformen auszuführen. Hinsichtlich der Vorteile und Modifikationen der erfindungsgemäßen Vorrichtung wird auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine landwirtschaftliche Ausbringmaschine während eines Ausbringvorgangs;
- Fig. 2a: eine schematische Darstellung einer landwirtschaftlichen Nutzfläche in einer Draufsicht;
- Fig. 2b: eine Materialverteilung auf der in der Fig. 2a dargestellten landwirtschaftlichen Nutzfläche nach Beendigung des Ausbringvorgangs;
- Fig. 3a: eine schematische Darstellung einer weiteren landwirtschaftlichen Nutzfläche in einer Draufsicht; und
- Fig. 3b: eine Materialverteilung auf der in der Fig. 3a dargestellten landwirtschaftlichen Nutzfläche nach Beendigung des Ausbringvorgangs.

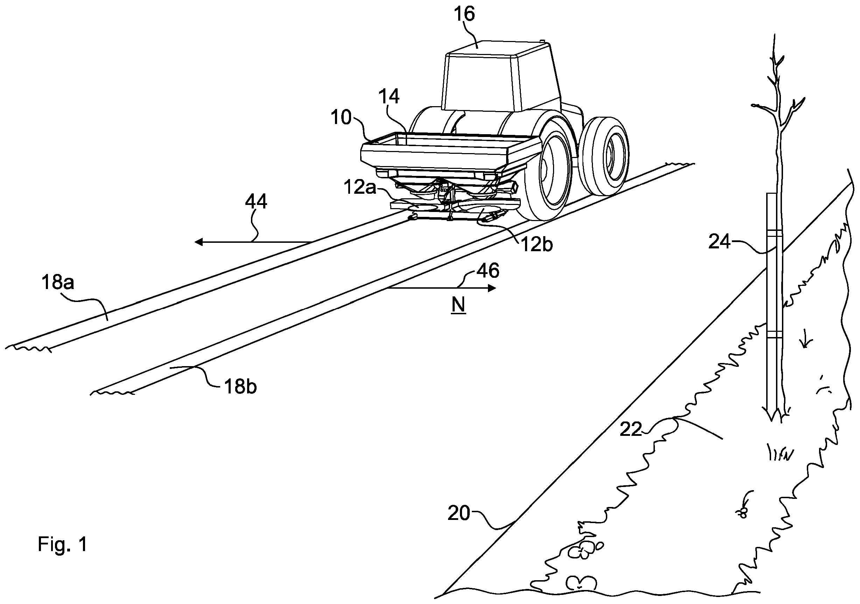

Gemäß Fig. 1 führt eine Ausbringkombination aus einem Traktor 16 und einer landwirtschaftlichen Ausbringmaschine 10 einen Ausbringvorgang auf einer landwirtschaftlichen Nutzfläche N durch. Die landwirtschaftliche Ausbringmaschine 10 ist als Düngerstreuer ausgebildet und weist zwei nebeneinander angeordnete und rotierend antreibbare Verteilscheiben 12a, 12b auf. Oberhalb der Verteilscheiben 12a, 12b ist ein Vorratsbehälter 14 für das Ausbringmaterial angeordnet. Das Ausbringmaterial ist folglich als Streugut, nämlich Dünger, ausgebildet. Der Traktor 16 bewegt sich entlang der Fahrspuren 18a, 18b, welche in unmittelbarer Nähe einer Feldgrenze 20 verlaufen. Jenseits der Feldgrenze 20 befindet sich ein Wohngebiet, wobei der an die landwirtschaftliche Nutzfläche N angrenzende Garten eine Hecke 22 und einen Baum 24 umfasst.

Der dargestellte Abschnitt der landwirtschaftlichen Nutzfläche N kann in grenznahe Bereich 46 und grenzferne Innenbereiche 44 unterteilt werden. Die grenznahen Bereiche 46 befinden sich zwischen den Fahrspuren 18a, 18b und der Feldgrenze 20. Die grenzfernen Innenbereiche 44 befinden sich auf der der Feldgrenze 20 abgewandten Seite der Fahrspuren 18a, 18b.

Vor dem dargestellten Ausbringvorgang war es notwendig, die für den Ausbringvorgang notwendige Menge an Ausbringmaterial zu bestimmen, damit der Vorratsbehälter 14 der landwirtschaftlichen Ausbringmaschine 10 entsprechend befüllt werden konnte. Das Bestimmen der für den Ausbringvorgang auf der landwirtschaftlichen Nutzfläche notwendigen Menge an Ausbringmaterial sowie das Befüllen der landwirtschaftlichen Ausbringmaschine 10 mit der für den Ausbringvorgang notwendigen Menge an Ausbringmaterial erfolgte im Rahmen der Vorbereitung des Ausbringvorgangs. Der Vorratsbehälter 14 der landwirtschaftlichen Ausbringmaschine wurde dabei derart befüllt, dass nach Beendigung des Ausbringvorgangs kein Ausbringmaterial in der landwirtschaftlichen Ausbringmaschine 10 verbleibt. Auf diese Weise wird ein zeit- und kostenintensives Entleeren der Ausbringmaschine 10 sowie schlecht handhabbare Restmengen nach Beendigung des Ausbringvorgangs vermieden.

Damit eine entsprechende Bestimmung der für den Ausbringvorgang auf der landwirtschaftlichen Nutzfläche N notwendigen Menge an Ausbringmaterial erfolgen konnte, wurden zunächst die Grenzen 20 der landwirtschaftlichen Nutzfläche N erfasst. Im Anschluss wurde dann die notwendige Menge an Ausbringmaterial für den Ausbringvorgang auf der landwirtschaftlichen Nutzfläche N ermittelt, wobei hierzu die von der im Wesentlichen gleichmäßigen Materialausbringung innerhalb der grenzfernen Innenbereiche der landwirtschaftlichen Nutzfläche N abweichende Grenzausbringung innerhalb der grenznahen Bereiche 46 der landwirtschaftlichen Nutzfläche N berücksichtigt wurde.

In grenznahen Bereichen 46 von landwirtschaftlichen Nutzflächen N wird üblicherweise eine verringerte Menge an Ausbringmaterial ausgebracht, sodass die mittlere Ausbringrate in grenznahen Bereichen 46 niedriger als in den grenzfernen Innenbereichen 44 einer landwirtschaftlichen Nutzfläche N. Damit nach Beendigung des Ausbringvorgangs kein Ausbringmaterial in der landwirtschaftlichen Ausbringmaschine 10 verbleibt, sind diese unterschiedlichen Ausbringcharakteristiken zu berücksichtigen, damit eine präzise Mengenermittlung umgesetzt werden kann.

Das Bestimmen der für den Ausbringvorgang auf der landwirtschaftlichen Nutzfläche N notwendigen Menge an Ausbringmaterial erfolgt durch eine Datenverarbeitungseinrichtung. Die Datenverarbeitungseinrichtung kann Bestandteil der landwirtschaftlichen Ausbringmaschine 10 oder Bestandteil eines maschinenexternen Computersystems sein.

Obwohl in der Fig. 1 eine Streugutausbringung dargestellt ist, kann die Bestimmung der für einen Ausbringvorgang auf einer landwirtschaftlichen Nutzfläche N notwendigen Menge an Ausbringmaterial auch für andere landwirtschaftliche Ausbringvorgänge, wie beispielsweise das Ausbringen von Spritzflüssigkeit mittels einer Feldspritze, verwendet werden.

Im Rahmen des Verfahrens zum Bestimmen der notwendigen Menge an Ausbringmaterial für den Ausbringvorgang auf der landwirtschaftlichen Nutzfläche N werden zunächst die grenzfernen Innenbereiche 44 und die grenznahen Bereiche 46 der landwirtschaftlichen Nutzfläche N ermittelt. Im Anschluss wird eine beabsichtigte Ausbringmenge für die grenzfernen Innenbereiche 44 und die grenznahen Bereiche 46 der landwirtschaftlichen Nutzfläche N ermittelt, sodass unter Berücksichtigung der Flächengrößen der grenzfernen Innenbereiche 44 und der grenznahen Bereiche 46 der landwirtschaftlichen Nutzfläche N die notwendigen Ausbringmengen für die grenzfernen Innenbereiche 44 und die grenznahen Bereiche 46 der landwirtschaftlichen Nutzfläche N ermittelt werden können.

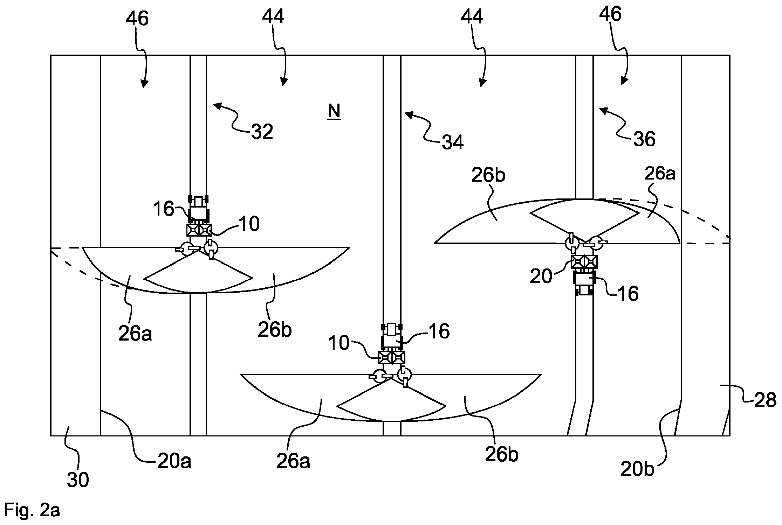

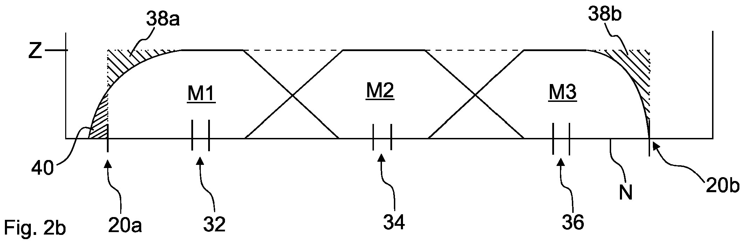

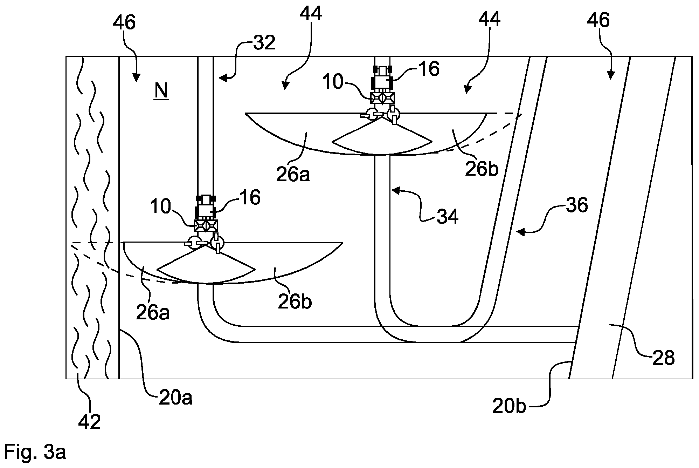

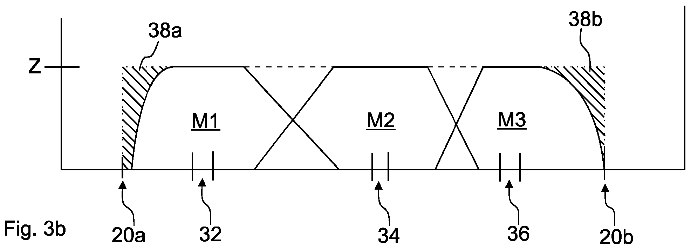

In den Fig. 2a und 2b und den Fig. 3a und 3b ist dargestellt, wie der Grenztyp einzelner Grenzsegmente der landwirtschaftlichen Nutzfläche N die notwendige Menge an Ausbringmaterial für einen Ausbringvorgang auf einer landwirtschaftlichen Nutzfläche N beeinflussen kann.

Gemäß Fig. 2a wird eine landwirtschaftliche Nutzfläche N durch eine Brachfläche 30 und durch eine Straße 28 begrenzt. Zwischen der landwirtschaftlichen Nutzfläche N und der Brachfläche 30 verläuft die Feldgrenze 20a. Zwischen der landwirtschaftlichen Nutzfläche N und der Straße 28 verläuft die Feldgrenze 20b. Die Materialausbringung erfolgt mittels einer als Zweischeibenstreuer ausgebildeten landwirtschaftlichen Ausbringmaschine 10, welche mittels eines Traktors 16 entlang der Fahrspuren 32 bis 36 bewegt wird. Die Verteilscheiben 12a, 12b der landwirtschaftlichen Ausbringmaschine 10 erzeugen während der Materialausbringung jeweils einen Streufächer 26a, 26b.

In den grenznahen Bereichen 46 der landwirtschaftlichen Nutzfläche N weicht die Materialausbringung von der in den grenzfernen Innenbereichen 44 umgesetzten Materialausbringung ab.

In Zusammenschau mit der Fig. 2b ergibt sich, dass die Verteilung der Ausbringmengen M1 bis M3 in den grenzfernen Innenbereichen 44 der landwirtschaftlichen Nutzfläche N eine im Wesentlichen gleichmäßige Materialausbringung ergeben. In den grenzfernen Innenbereichen 44 entspricht die Gesamtmenge des ausgebrachten Ausbringmaterials im Wesentlichen der Zielmenge Z. Innerhalb der grenznahen Bereiche 46 liegt dagegen keine gleichmäßige Materialausbringung vor. In dem Bereich der Feldgrenze 20a wurde Ausbringmaterial über die Feldgrenze 20a hinweg auf die Brachfläche 30 abgeworfen. Die sich hieraus ergebende Zusatzmenge 40 an Ausbringmaterial ist bei der Bestimmung der für den Ausbringvorgang auf der landwirtschaftlichen Nutzfläche N notwendigen Menge an Ausbringmaterial zu berücksichtigen. Aufgrund der Anpassungsbeschränkungen der Materialausbringung hinsichtlich der Querverteilung des Ausbringmaterials ergeben sich im Bereich der Feldgrenzen 20a, 20b außerdem Mindermengen 38a, 38b, welche die Differenz zwischen der Zielmenge und der tatsächlich ausgebrachten Menge an Ausbringmaterial repräsentieren. Auch diese Mindermengen 38a, 38b sind beim Bestimmen der für den Ausbringvorgang auf der landwirtschaftlichen Nutzfläche N notwendigen Menge an Ausbringmaterial zu berücksichtigen.

Gemäß der Fig. 3a wird die landwirtschaftliche Nutzfläche N von einem Gewässer 42 und einer Straße 28 begrenzt. Zwischen dem Gewässer 42 und der landwirtschaftlichen Nutzfläche N verläuft die Feldgrenze 20a. Zwischen der Straße 28 und der landwirtschaftlichen Nutzfläche N verläuft die Feldgrenze 20b. Zur Vermeidung eines Streugutauswurfs in das Gewässer 42 erfolgt die Materialausbringung mit einem Sicherheitsabstand zu der Feldgrenze 20a. Ferner ist es nicht unüblich die Ausbringrate des Ausbringmaterials im Bereich von Gewässergrenzen zu reduzieren. Aufgrund des Sicherheitsabstands, der beschränkten Einstellbarkeit der Querverteilung des Ausbringmaterials und gegebenenfalls einer Reduzierung der Ausbringrate kommt es im Bereich der Feldgrenze 20a ebenfalls zu einer verringerten Materialausbringung im Vergleich zu den grenzfernen Innenbereichen 44 der landwirtschaftlichen Nutzfläche N.

Die Fig. 3b veranschaulicht die sich ergebende Mindermenge 38a im Bereich der Feldgrenze 20a sowie die sich ergebende Mindermenge 38b im Bereich der Feldgrenze 20b. Diese Mindermengen 38a, 38b sind beim Bestimmen der für den Ausbringvorgang auf der landwirtschaftlichen Nutzfläche N notwendigen Menge an Ausbringmaterial zu berücksichtigen, damit die Ausbringmaschine 10 vor dem Ausbringvorgang mit einer geeigneten Menge an Ausbringmaterial befüllt werden kann.

In analoger Weise zu den sicher ergebenden Mindermengen 38a, 38b können auch erhöhte Ausbringmengen auftreten, wenn Ausbringüberlappungen beispielsweise aufgrund einer unregelmäßigen Feldgeometrie auftreten.

### Bezugszeichen

- 10: Ausbringmaschine
- 12a, 12b: Verteilscheiben
- 14: Vorratsbehälter
- 16: Traktor
- 18a, 18b: Fahrspuren
- 20, 20a, 20b: Feldgrenzen
- 22: Hecke
- 24: Baum
- 26a, 26b: Streufächer
- 28: Straße
- 30: Brachfläche
- 32-36: Fahrspuren
- 38: Mindermengen
- 40: Zusatzmenge
- 42: Gewässer
- 44: grenzferne Innenbereiche
- 46: grenznahe Bereiche

- M1-M3: Mengen
- N: Nutzfläche
- Z: Zielmenge

## Patentansprüche

1. Verfahren zur Vorbereitung eines Ausbringvorgangs auf einer landwirtschaftlichen Nutzfläche (N), mit den Schritten:
- Bestimmen der notwendigen Menge an Ausbringmaterial für einen Ausbringvorgang auf einer landwirtschaftlichen Nutzfläche (N); und
- Befüllen einer landwirtschaftlichen Ausbringmaschine (10) mit der bestimmten für den Ausbringvorgang notwendigen Menge an Ausbringmaterial;
wobei das Bestimmen der notwendigen Menge an Ausbringmaterial für den Ausbringvorgang erfolgt mit einem Verfahren zum Bestimmen der für einen Ausbringvorgang auf einer landwirtschaftlichen Nutzfläche (N) notwendigen Menge an Ausbringmaterial, mit den Schritten:
- Erfassen von Grenzen einer landwirtschaftlichen Nutzfläche (N); und
- Ermitteln einer notwendigen Menge an Ausbringmaterial für einen Ausbringvorgang auf der landwirtschaftlichen Nutzfläche (N),
wobei beim Ermitteln der notwendigen Menge an Ausbringmaterial für den Ausbringvorgang auf der landwirtschaftlichen Nutzfläche (N) die von der im Wesentlichen gleichmäßigen Materialausbringung innerhalb von grenzfernen Innenbereichen (44) der landwirtschaftlichen Nutzfläche (N) abweichende Grenzausbringung innerhalb von grenznahen Bereichen (46) der landwirtschaftlichen Nutzfläche (N) berücksichtigt wird.

2. Verfahren nach Anspruch 1, **gekennzeichnet durch** zumindest einen der folgenden Schritte:
- Erfassen von grenzfernen Innenbereichen (44) der landwirtschaftlichen Nutzfläche (N);
- Ermitteln der für die grenzfernen Innenbereiche (44) der landwirtschaftlichen Nutzfläche (N) notwendigen Menge an Ausbringmaterial für den Ausbringvorgang.

3. Verfahren nach Anspruch 2, **dadurch gekennzeichnet, dass** das Ermitteln der für die grenzfernen Innenbereiche (44) der landwirtschaftlichen Nutzfläche (N) notwendigen Menge an Ausbringmaterial für den Ausbringvorgang zumindest einen der folgenden Schritte umfasst:
- Ermitteln einer beabsichtigten Ausbringrate für die grenzfernen Innenbereiche (44) der landwirtschaftlichen Nutzfläche (N);
- Ermitteln der Flächengröße der grenzfernen Innenbereiche (44) der landwirtschaftlichen Nutzfläche (N).

4. Verfahren nach einem der vorstehenden Ansprüche, **gekennzeichnet durch** zumindest einen der folgenden Schritte:
- Erfassen von grenznahen Bereichen (46) der landwirtschaftlichen Nutzfläche (N);
- Ermitteln der für die grenznahen Bereiche (46) der landwirtschaftlichen Nutzfläche (N) notwendigen Menge an Ausbringmaterial für den Ausbringvorgang.

5. Verfahren nach Anspruch 4, **dadurch gekennzeichnet, dass** das Ermitteln der für die grenznahen Bereiche (46) der landwirtschaftlichen Nutzfläche (N) notwendigen Menge an Ausbringmaterial für den Ausbringvorgang zumindest einen der folgenden Schritte umfasst:
- Ermitteln einer mittleren Ausbringrate für die grenznahen Bereiche (46) der landwirtschaftlichen Nutzfläche (N);
- Ermitteln der Flächengröße der grenznahen Bereiche (46) der landwirtschaftlichen Nutzfläche (N).

6. Verfahren nach Anspruch 4 oder 5, **dadurch gekennzeichnet, dass** Ermitteln der für die grenznahen Bereiche (46) der landwirtschaftlichen Nutzfläche (N) notwendigen Menge an Ausbringmaterial für den Ausbringvorgang zumindest einen der folgenden Schritte umfasst:
- Rastern der grenznahen Bereiche (46) der landwirtschaftlichen Nutzfläche (N) in mehrere Rasterflächen;
- Ermitteln eines Mengenkorrekturfaktors für die jeweiligen Rasterflächen der grenznahen Bereiche (46) der landwirtschaftlichen Nutzfläche (N).

7. Verfahren nach einem der Ansprüche 3 bis 6, **gekennzeichnet durch** zumindest einen der folgenden Schritte:
- Gliedern der Grenze der landwirtschaftlichen Nutzfläche (N) in mehrere Grenzsegmente,
- Zuordnen eines Grenztyps zu jedem der Grenzsegmente,
wobei beim Ermitteln der für die grenznahen Bereiche (46) der landwirtschaftlichen Nutzfläche (N) notwendigen Menge an Ausbringmaterial für den Ausbringvorgang vorzugsweise die Grenztypen der Grenzsegmente berücksichtigt werden.

8. Verfahren nach einem der Ansprüche 3 bis 7, **gekennzeichnet durch** zumindest einen der folgenden Schritte:
- Erfassen der einzusetzenden Ausbringmaschine (10),
- Erfassen der Anpassungsbeschränkungen der Materialausbringung der einzusetzenden Ausbringmaschine (10), insbesondere hinsichtlich der Querverteilung des Ausbringmaterials,
wobei beim Ermitteln der für die grenznahen Bereiche (46) der landwirtschaftlichen Nutzfläche (N) notwendigen Menge an Ausbringmaterial für den Ausbringvorgang vorzugsweise die Anpassungsbeschränkungen der Materialausbringung der einzusetzenden Ausbringmaschine (10) berücksichtigt werden.

9. Vorrichtung zum Bestimmen der notwendigen Menge an Ausbringmaterial für einen Ausbringvorgang auf einer landwirtschaftlichen Nutzfläche (N), mit
- einer Eingabeeinrichtung, über welche Angaben zu einem geplanten Ausbringvorgang auf einer landwirtschaftlichen Nutzfläche (N) durch einen Benutzer eingebbar sind; und
- einer Datenverarbeitungseinrichtung, welche dazu eingerichtet ist, die notwendige Menge an Ausbringmaterial für den Ausbringvorgang auf der landwirtschaftlichen Nutzfläche (N) zu berechnen,
wobei die Datenverarbeitungseinrichtung Bestandteil einer landwirtschaftlichen Ausbringmaschine ist und dass Vorrichtung dazu eingerichtet ist, ein Verfahren zum Bestimmen der für einen Ausbringvorgang auf einer landwirtschaftlichen Nutzfläche (N) notwendigen Menge an Ausbringmaterial auszuführen, mit den Schritten:
- Erfassen von Grenzen einer landwirtschaftlichen Nutzfläche (N); und
- Ermitteln einer notwendigen Menge an Ausbringmaterial für einen Ausbringvorgang auf der landwirtschaftlichen Nutzfläche (N),
wobei beim Ermitteln der notwendigen Menge an Ausbringmaterial für den Ausbringvorgang auf der landwirtschaftlichen Nutzfläche (N) die von der im Wesentlichen gleichmäßigen Materialausbringung innerhalb von grenzfernen Innenbereichen (44) der landwirtschaftlichen Nutzfläche (N) abweichende Grenzausbringung innerhalb von grenznahen Bereichen (46) der landwirtschaftlichen Nutzfläche (N) berücksichtigt wird.

## Claims

1. Method for preparing an application process on an agricultural area (N), comprising the steps of:
- determining the quantity of application material required for an application process on an agricultural area (N); and
- filling an agricultural application machine (10) with the determined quantity of application material required for the application process;
wherein the quantity of application material required for the application process is determined by a method for determining the quantity of application material required for an application process on an agricultural area (N), comprising the steps of:
- detecting boundaries of an agricultural area (N); and
- determining a quantity of application material required for an application process on the agricultural area (N),
wherein, when determining the quantity of application material required for the application process on the agricultural area (N), the boundary application within boundary-proximal regions (46) of the agricultural area (N), which application deviates from the substantially uniform material application within boundary-distal inner regions (44) of the agricultural area (N), is taken into account.

2. Method according to claim 1, **characterized by** at least one of the following steps:
- detecting boundary-distal inner regions (44) of the agricultural area (N);
- determining the quantity of application material for the application process that is required for the boundary-distal inner regions (44) of the agricultural area (N).

3. Method according to claim 2, **characterized in that** determining the quantity of application material for the application process that is required for the boundary-distal inner regions (44) of the agricultural area (N) comprises at least one of the following steps:
- determining an intended application rate for the boundary-distal inner regions (44) of the agricultural area (N);
- determining the area size of the boundary-distal inner regions (44) of the agricultural area (N).

4. Method according to any of the preceding claims, **characterized by** at least one of the following steps:
- detecting boundary-proximal regions (46) of the agricultural area (N);
- determining the quantity of application material for the application process that is required for the boundary-proximal regions (46) of the agricultural area (N).

5. Method according to claim 4, **characterized in that** determining the quantity of application material for the application process that is required for the boundary-proximal regions (46) of the agricultural area (N) comprises at least one of the following steps:
- determining an average application rate for the boundary-proximal regions (46) of the agricultural area (N);
- determining the area size of the boundary-proximal regions (46) of the agricultural area (N).

6. Method according to either claim 4 or claim 5, **characterized in that** determining the quantity of application material for the application process that is required for the boundary-proximal regions (46) of the agricultural area (N) comprises at least one of the following steps:
- rasterizing the boundary-proximal regions (46) of the agricultural area (N) into a plurality of raster areas;
- determining a quantity correction factor for the respective raster areas of the boundary-proximal regions (46) of the agricultural area (N).

7. Method according to any of claims 3 to 6, **characterized by** at least one of the following steps:
- dividing the boundary of the agricultural area (N) into a plurality of boundary segments,
- assigning a boundary type to each of the boundary segments,
wherein, when determining the quantity of application material for the application process that is required for the boundary-proximal regions (46) of the agricultural area (N), the boundary types of the boundary segments are preferably taken into account.

8. Method according to any of claims 3 to 7, **characterized by** at least one of the following steps:
- detecting the application machine to be used (10),
- detecting the adjustment limitations of the material application of the application machine (10) to be used, in particular with regard to the transverse distribution of the application material,
wherein, when determining the quantity of application material for the application process that is required for the boundary-proximal regions (46) of the agricultural area (N), the adjustment limitations of the material application of the application machine (10) to be used are preferably taken into account.

9. Apparatus for determining the quantity of application material required for an application process on an agricultural area (N), comprising
- an input device via which information about a planned application process on an agricultural area (N) can be entered by a user; and
- a data processing device which is designed to calculate the quantity of application material required for the application process on the agricultural area (N),
wherein the data processing device is part of an agricultural application machine and in that the apparatus is designed to carry out a method for determining the quantity of application material required for an application process on an agricultural area (N), comprising the steps of:
- detecting boundaries of an agricultural area (N); and
- determining a quantity of application material required for an application process on the agricultural area (N),
wherein, when determining the quantity of application material required for the application process on the agricultural area (N), the boundary application within boundary-proximal regions (46) of the agricultural area (N), which application deviates from the substantially uniform material application within boundary-distal inner regions (44) of the agricultural area (N), is taken into account.

## Revendications

1. Procédé pour la préparation d'un processus d'épandage sur une surface agricole utile (N), comportant les étapes consistant à :
- déterminer la quantité nécessaire de matière à épandre pour un processus d'épandage sur une surface agricole utile (N) ; et
- remplir une machine d'épandage (10) agricole avec la quantité nécessaire de matière à épandre déterminée pour le processus d'épandage ;
dans lequel la détermination de la quantité nécessaire de matière à épandre pour le processus d'épandage est effectuée au moyen d'un procédé permettant la détermination de la quantité nécessaire de matière à épandre pour un processus d'épandage sur une surface agricole utile (N), comportant les étapes consistant à :
- détecter des frontières d'une surface agricole utile (N) ; et
- définir une quantité nécessaire de matière à épandre pour un processus d'épandage sur la surface agricole utile (N),
dans lequel, lors de la définition de la quantité nécessaire de matière à épandre pour le processus d'épandage sur la surface agricole utile (N), l'épandage frontalier à l'intérieur de zones proches de la frontière (46) de la surface agricole utile (N), lequel épandage frontalier diffère de l'épandage de matière sensiblement régulier à l'intérieur de zones intérieures éloignées de la frontière (44) de la surface agricole utile (N), est pris en compte.

2. Procédé selon la revendication 1, **caractérisé par** au moins l'une des étapes suivantes :
- détection des zones intérieures éloignées de la frontière (44) de la surface agricole utile (N) ;
- définition de la quantité nécessaire de matière à épandre pour le processus d'épandage pour les zones intérieures éloignées de la frontière (44) de la surface agricole utile (N).

3. Procédé selon la revendication 2, **caractérisé en ce que** la définition de la quantité nécessaire de matière à épandre pour le processus d'épandage pour les zones intérieures éloignées de la frontière (44) de la surface agricole utile (N) comprend au moins l'une des étapes suivantes :
- définition d'un taux d'épandage prévu pour les zones intérieures éloignées de la frontière (44) de la surface agricole utile (N) ;
- définition de la grandeur de superficie des zones intérieures éloignées de la frontière (44) de la surface agricole utile (N).

4. Procédé selon au moins l'une des revendications précédentes, **caractérisé par** au moins l'une des étapes suivantes :
- détection des zones proches de la frontière (46) de la surface agricole utile (N) ;
- définition de la quantité nécessaire de matière à épandre pour le processus d'épandage pour les zones proches de la frontière (46) de la surface agricole utile (N).

5. Procédé selon la revendication 4, **caractérisé en ce que** la définition de la quantité nécessaire de matière à épandre pour le processus d'épandage pour les zones proches de la frontière (46) de la surface agricole utile (N) comprend au moins l'une des étapes suivantes :
- définition d'un taux d'épandage moyen pour les zones proches de la frontière (46) de la surface agricole utile (N) ;
- définition de la grandeur de superficie des zones proches de la frontière (46) de la surface agricole utile (N).

6. Procédé selon la revendication 4 ou 5, **caractérisé en ce que** la définition de la quantité nécessaire de matière à épandre pour le processus d'épandage pour les zones proches de la frontière (46) de la surface agricole utile (N) comprend au moins l'une des étapes suivantes :
- quadrillage des zones proches de la frontière (46) de la surface agricole utile (N) en plusieurs surfaces quadrillées ;
- définition d'un facteur de correction de quantité pour les surfaces quadrillées respectives des zones proches de la frontière (46) de la surface agricole utile (N).

7. Procédé selon l'une des revendications 3 à 6, **caractérisé par** au moins l'une des étapes suivantes :
- division de la frontière de la surface agricole utile (N) en plusieurs segments frontaliers,
- attribution d'un type de frontière à chacun des segments frontaliers,
dans lequel, lors de la définition de la quantité nécessaire de matière à épandre pour le processus d'épandage pour les zones proches de la frontière (46) de la surface agricole utile (N), de préférence, les types de frontières des segments frontaliers sont pris en compte.

8. Procédé selon l'une des revendications 3 à 7, **caractérisé par** au moins l'une des étapes suivantes :
- détection de la machine d'épandage (10) à utiliser,
- détection des restrictions d'adaptation de l'épandage de matière de la machine d'épandage (10) à utiliser, en particulier en ce qui concerne la distribution transversale de la matière à épandre,
dans lequel, lors de la définition de la quantité nécessaire de matière à épandre pour le processus d'épandage pour les zones proches de la frontière (46) de la surface agricole utile (N), de préférence, les restrictions d'adaptation de l'épandage de matière de la machine d'épandage (10) à utiliser sont prises en compte.

9. Dispositif pour la détermination de la quantité nécessaire de matière à épandre pour un processus d'épandage sur une surface agricole utile (N), comportant
- un appareil de saisie, par l'intermédiaire duquel des indications concernant un processus d'épandage planifié sur une surface agricole utile (N) peuvent être saisies par un utilisateur ; et
- un appareil de traitement de données qui est configuré pour calculer la quantité nécessaire de matière à épandre pour le processus d'épandage sur la surface agricole utile (N),
dans lequel l'appareil de traitement de données fait partie intégrante d'une machine d'épandage agricole et **en ce que** le dispositif est configuré pour exécuter un procédé pour la détermination de la quantité nécessaire de matière à épandre pour un processus d'épandage sur une surface agricole utile (N), comportant les étapes consistant à :
- détecter des frontières d'une surface agricole utile (N) ; et
- définir une quantité nécessaire de matière à épandre pour un processus d'épandage sur la surface agricole utile (N),
dans lequel, lors de la définition de la quantité nécessaire de matière à épandre pour le processus d'épandage sur la surface agricole utile (N), l'épandage frontalier à l'intérieur de zones proches de la frontière (46) de la surface agricole utile (N), lequel épandage frontalier diffère de l'épandage de matière sensiblement régulier à l'intérieur de zones intérieures éloignées de la frontière (44) de la surface agricole utile (N), est pris en compte.
